(19) Europäisches Patentamt
European Patent Office
Office européen des brevets

(11) EP 4 703 832 A1

(12) EUROPEAN PATENT APPLICATION

(43) Date of publication:
04.03.2026 Bulletin 2026/10

(21) Application number: 25197564.5

(22) Date of filing: 22.08.2025

(51) International Patent Classification (IPC):
G05D 1/243 (2024.01)    G05D 101/15 (2024.01)
G05D 111/10 (2024.01)    G05D 111/63 (2024.01)
G06T 7/73 (2017.01)

(52) Cooperative Patent Classification (CPC):
G05D 1/2437; G06T 7/73; G05D 2101/15;
G05D 2111/10; G05D 2111/65; G06T 2207/10024;
G06T 2207/20084

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.08.2024 IN 202421065683

(71) Applicant: Tata Consultancy Services Limited
Maharashtra (IN)

(72) Inventors:
• PAUL, Sayan
700135 Kolkata, West Bengal (IN)
• ROYCHOUDHURY, Ruddra Dev
700135 Kolkata, West Bengal (IN)
• BHOWMICK, Brojeshwar
700135 Kolkata, West Bengal (IN)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR MOTION PRIOR BASED VISUAL ODOMETRY FOR GROUND ROBOT NAVIGATION**

(57)    Traditional Visual Odometry (VO) systems face challenges in wide-baseline scenarios leading to drift and catastrophic failures in robot navigation and suffer from sample inefficiency during training. Embodiments of present disclosure provide a method and system for motion prior based VO for ground robot navigation. A robot acquires a previous observation at a previous time step, an action prior, and a current observation at a current time step. Using this data, VO module estimates relative pose between previous and current observations. The VO module comprises a Geometric Coarse Pose Estimator module (GCPE) to estimate a coarse relative pose, and Neural Fine Pose Regression model (NFPR) to regress fine pose using the coarse pose and the acquired inputs. Then, using the relative pose, the current goal coordinates are updated. Finally, a navigation policy determines next action to take to reach the goal using updated goal coordinates and the current observation.

FIG. 3

**EP 4 703 832 A1**

**Description**

CROSS-REFERENCE TO RELATED APPLICATIONS AND PRIORITY

The present application claims priority to Indian application no. 202421065683, filed on August 30, 2024.

TECHNICAL FIELD

The present invention generally relates to the field of robot navigation, and, more particularly, to a method and system for motion prior based visual odometry for ground robot navigation.

BACKGROUND

Autonomous visual navigation in novel indoor environments is a fundamental skill for robots to perform further intelligent downstream tasks like finding and retrieving an object, rearranging various stuff, etc. This has been the focus of computer vision and robotics researchers for a long time. Point goal navigation (alternatively referred to as PointNav) is a standard evaluation framework for autonomous visual navigation proposed by Anderson *et al*. In PointNav, an agent or robot is initialized in a previously unseen environment and tasked to reach a goal location specified with respect to its initial location, i.e. go to ($\triangle\ x, \triangle\ y$). The action space of the agent is discrete and mainly consists of 4 types of actions: move_forward, turn_right, turn_left and stop (to end the episode). A pointnav episode is considered successful if the agent stops within a pre-determined distance of the goal location (for e.g. 2 x robot radius) and within the maximum number of time-steps allowed in an episode (say for e.g. 500 time-steps). Apart from success, the agent is evaluated via navigation metrics like Success weighted by Path Length (SPL) and SoftSPL.

The PointNav task can either be approached via classical or learned map-based methods (where the agent simultaneously maps an unexplored area, localizes within it and then plans a path towards the goal) or via recent map-less end-to-end reinforcement learning based methods. Under the assumption of an ideal scenario, i.e. perfect localization using noiseless Global Positioning System (GPS) + Compass, noiseless egocentric RGB-D (a combination of a Red, Green, and Blue and its associated depth) sensors and absence of actuation noise; the PointNav V1 task is fully solved by both map-based and map-less approaches. But the real-world is not ideal, so PointNav V2 came into existence where the agent needs to localize itself (absence of GPS + Compass sensors), has noisy RGB-D observations and noisy actuations. Under this noisy setting, both map-based and map-less approaches need to focus on accurate localization of the agent. Recent map-less learning based approaches try to solve this by breaking down the pipeline into two parts - learning Visual Odometry (VO) (for localization) and learning navigation policy (for actions) separately. During inference, this VO model can be used as a drop-in replacement for the Global Positioning System (GPS) + Compass sensor with navigation policies trained using ground-truth localization in simulation.

VO has been studied in computer or robot vision literature for a long time and many solutions exist, however, they cannot be easily applied to agent navigation task since they are harder to solve. Due to the agent's discrete action space and large motion per action (default: 0.25m forward and 30 deg turns), VO needs to be estimated in a wide camera baseline setting, i.e. the two views are wide-apart and the overlapping region is less. Most of the VO methods, both classical and learned, assume availability of frame-pairs with a large overlap i.e., a narrow baseline setting. But for practical robot navigation, wide-baseline VO is necessary because situations might arise where the robot motion is fast and/or observation processing or transmission FPS is low. Recently, learned VO methods used with RL-based navigation policies in map-less approaches have tried to solve this problem and has achieved robust performance but suffer from sample-inefficiency, embodiment specificity and dataset specificity. It requires huge compute resources to train such a model, and it can't be zero-shot transferred to any other embodiment or dataset.

SUMMARY

Embodiments of the present disclosure present technological improvements as solutions to one or more of the above-mentioned technical problems recognized by the inventors in conventional systems. For example, in one embodiment, a method for motion prior based visual odometry for ground robot navigation is provided. The method includes obtaining a plurality of inputs comprising: i) a previous observation at a previous time step from a robot, ii) an action prior defining an action performed by the robot at the previous time step, and iii) a current observation at a current time step obtained after performing the action by the robot. Further, the method includes determining a relative pose of the robot between the previous observation and the current observation based on the plurality of inputs by using a Visual Odometry (VO) module. The VO module comprises i) a Geometric Coarse Pose Estimator (GCPE) module, and ii) a Neural Fine Pose Regression (NFPR) module. The GCPE module estimates a coarse relative pose of the robot using the plurality of inputs. The NFPR module determines the relative pose of the robot using the plurality of inputs and the coarse relative pose as motion prior. Furthermore, the method includes updating a plurality of goal coordinates of the robot at the previous timestep based on the relative pose of the robot and determining a next action to be performed by the robot at the current timestep based on the updated plurality of goal coordinates using a navigation policy for ground navigation by the robot.

In another aspect, a system for motion prior based visual odometry for ground robot navigation is provided. The system includes: a memory storing instructions; one or more communication interfaces; and one or more hardware processors coupled to the memory via the one or more communication interfaces, wherein the one or more hardware processors are configured by the instructions to obtain a plurality of inputs comprising: i) a previous observation at a previous time step from a robot, ii) an action prior defining an action performed by the robot at the previous time step, and iii) a current observation at a current time step obtained after performing the action by the robot. Further, the one or more hardware processors are configured by the instructions to determine a relative pose of the robot between the previous observation and the current observation based on the plurality of inputs by using a Visual Odometry (VO) module. The VO module comprises i) a Geometric Coarse Pose Estimator (GCPE) module, and ii) a Neural Fine Pose Regression (NFPR) module. The GCPE module estimates a coarse relative pose of the robot using the plurality of inputs. The NFPR module determines the relative pose of the robot using the plurality of inputs and the coarse relative pose as motion prior. Furthermore, the one or more hardware processors are configured to update a plurality of goal coordinates of the robot at the previous timestep based on the relative pose of the robot and determine a next action to be performed by the robot at the current timestep based on the updated plurality of goal coordinates using a navigation policy for ground navigation by the robot.

In yet another aspect, there are provided one or more non-transitory machine-readable information storage mediums comprising one or more instructions which when executed by one or more hardware processors cause a method for motion prior based visual odometry for ground robot navigation. The method includes obtaining a plurality of inputs comprising: i) a previous observation at a previous time step from a robot, ii) an action prior defining an action performed by the robot at the previous time step, and iii) a current observation at a current time step obtained after performing the action by the robot. Further, the method includes determining a relative pose of the robot between the previous observation and the current observation based on the plurality of inputs by using a Visual Odometry (VO) module. The VO module comprises i) a Geometric Coarse Pose Estimator (GCPE) module, and ii) a Neural Fine Pose Regression (NFPR) module. The GCPE module estimates a coarse relative pose of the robot using the plurality of inputs. The NFPR module determines the relative pose of the robot using the plurality of inputs and the coarse relative pose as motion prior. Furthermore, the method includes updating a plurality of goal coordinates of the robot at the previous timestep based on the relative pose of the robot and determining a next action to be performed by the robot at the current timestep based on the updated plurality of goal coordinates using a navigation policy for ground navigation by the robot.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram for motion prior based visual odometry for ground robot navigation, according to some embodiments of the present disclosure.
FIG. 2 is a flow diagram illustrating a method for motion prior based visual odometry for ground robot navigation, according to some embodiments of the present disclosure.
FIG. 3 is an alternative representation of the method of FIG. 2, according to some embodiments of the present disclosure.
FIG. 4 illustrates working of Geometric Coarse Pose Estimation (GCPE) module, according to some embodiments of the present disclosure.
FIG. 5 illustrates working of Neural Fine Pose Regression (NFPR) module, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Autonomous visual navigation for indoor robots has been studied for many years. Recently, due to the advances in deep learning and computer vision, there has been a renewed interest in the use of learning to design navigation policies for a variety of downstream tasks like PointNav, ObjectNav, Rearrangement, Vision-and-Language based tasks, etc. Classical approaches decompose the visual navigation task into several sub-tasks such as localization and mapping, followed by planning and control. Though these methods can work well when their hyperparameters are hand-tuned properly, errors in one sub-task module can propagate to other downstream modules and affect adversely. Recent end-to-end learned navigation policies alleviate some of these issues and can even outperform classical methods with sufficient data and training. But these require huge compute resources and sometimes pose problem in generalization. To circumvent these problems, some modular learned approaches combine the best of both worlds to retain the benefits of learning and also the classical decomposition.

Visual Odometry (VO) has been solved using both classical and learned approaches in the last decade. Most VO methods can be categorized as sparse or dense depending on whether the method uses sparse features like key points, lines, etc. for feature matching or it uses the whole image to determine the optical flow, photo-metric error, etc. The sparse methods are generally better suited for wide baseline settings due to their ability to handle large viewpoint variations. Classical sparse approaches typically use a handcrafted key point feature descriptor like Scale-Invariant Feature Transform (SIFT), Oriented FAST (Features from Accelerated Segment Test) and rotated BRIEF (Binary Robust Independent Elementary Features) (ORB), etc. followed by correspondence matching (alternatively referred to as key point matching) and pose estimation using geometric methods. Recently learned sparse methods have introduced learned feature descriptors like SuperPoint, DIScrete Keypoints (DISK), etc. and learned correspondence matchers like LightGlue, SuperGlue, etc. which perform better than their classical counterparts. VO methods based on these learned submodules perform well on aggregated relative pose estimation metrics but suffer in trajectory performance due to difficult frame pairs with featureless walls, high depth noise, etc.

On the other hand, there has been a surge of dense end-to-end learned VO methods in the recent years which directly input image-pairs into their Convolutional Neural Network (CNN) models to regress the relative pose or CNN-RNN (Recurrent Neural Network) models to regress the absolute pose of the camera. Most of these methods either require narrow camera baseline and/or trained on outdoor autonomous driving datasets like KITTI (Karlsruhe Institute of Technology and Toyota Technological Institute) which pose far lesser challenges than that faced by indoor robots. In the embodied AI community, renewed interest in learning better navigation policies has led to progress in VO models which take wide-baseline noisy RGB-D image pairs as input and regress the relative pose as output. They exhibit robust performance when used to estimate robot trajectories for point goal and other downstream navigation tasks. But they suffer from sample inefficiency requiring huge compute resources and data.

Embodiments of present disclosure provide a method and system for motion prior based visual odometry for ground robot navigation in order to overcome the above mentioned challenges. A robot (alternately referred to as an agent) targeted to reach a goal location in an environment acquires a previous observation at a previous time step, an action prior defining an action performed by the robot at the previous time step, and a current observation at a current time step obtained after performing the action by the robot. Using this data, a Visual Odometry (VO) module estimates the relative pose between the previous and the current observations. The VO module comprises (i) a geometric coarse pose estimator module (GCPE) to estimate a coarse relative pose, and (ii) a neural fine pose regression module (NFPR) to regress a fine pose using the coarse pose and the acquired inputs. Then, using the relative pose, the current goal coordinates are updated. Finally, a navigation policy determines at each time-step which action to take to reach the goal using this updated goal coordinates and the current observation.

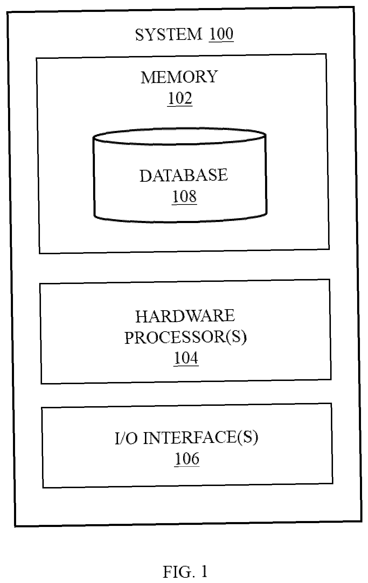

Referring now to the drawings, and more particularly to FIGS. 1 to 5, where similar reference characters denote corresponding features consistently throughout the figures, there are shown preferred embodiments, and these embodiments are described in the context of the following exemplary system and/or method.

FIG. 1 illustrates an exemplary block diagram of a system for motion prior based visual odometry for ground robot navigation, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

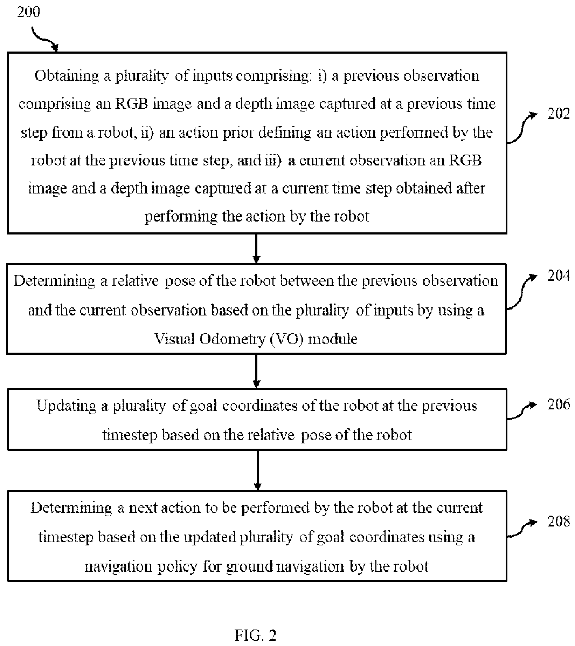

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The memory 102 stores instructions for executing the methodology described herein. The database 108 stores information pertaining to inputs fed to the system 100 and/or outputs generated by the system (e.g., at each stage), specific to the methodology described herein. Functions of the components of system 100 are explained in conjunction with flow diagrams depicted in FIGS. 2 to 5 for motion prior based visual odometry for ground robot navigation.

In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, and the steps of flow diagram depicted in FIGS. 2-5 for motion prior based visual odometry for ground robot navigation. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

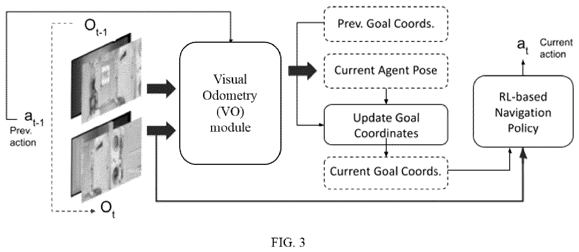

FIG. 2 is a flow diagram illustrating a method for motion prior based visual odometry for ground robot navigation, according to some embodiments of the present disclosure. FIG. 3 is an alternative representation of the method of FIG. 2, according to some embodiments of the present disclosure. At step 202, the one or more hardware processors 104 are configured to obtain a plurality of inputs comprising: i) a previous observation comprising an Red, Green, and Blue (RGB) image and a depth image captured at a previous time step from a robot, ii) an action prior defining an action performed by the robot at the previous time step, and iii) a current observation an RGB image and a depth image captured at a current time step obtained after performing the action by the robot. As illustrated in FIG. 3, $O_{t-1}$ represents the previous observation, $O_t$ represents the current observation and $a_{t-1}$ represents the action prior.

Once the plurality of inputs are obtained, at step 204 of the method 200, the one or more hardware processors 104 are configured to determine a relative pose of the robot between the previous observation and the current observation based on the plurality of inputs by using a Visual Odometry (VO) module. The VO module comprises i) a Geometric Coarse Pose Estimator (GCPE) module, and ii) a Neural Fine Pose Regression (NFPR) module. The GCPE module estimates a coarse relative pose of the robot using the plurality of inputs. The NFPR module determines the relative pose of the robot using the plurality of inputs and the coarse relative pose as motion prior.

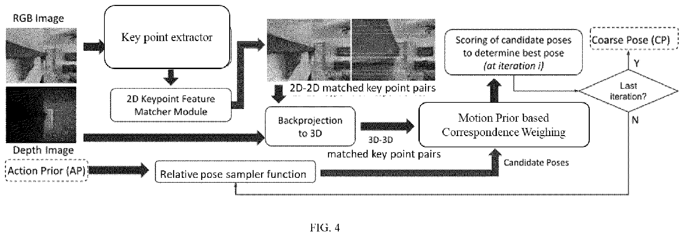

FIG. 4 illustrates working of Geometric Coarse Pose Estimation (GCPE) module, according to some embodiments of the present disclosure. The GCPE module takes as input the current observation, the previous observation and the Action Prior (AP). Then, the GCPE module extracts a first set of visual key points ($I_a$) from the RGB image comprised in the previous observation and a second set of visual key points ($I_b$) from the RGB image comprised in the current observation using a key point extractor such as DISK, SuperPoint, SIFT etc. Next, a plurality of visual key points ($p_a$, $p_b$) are matched between the first set of visual key points and the second set of visual key points using a key point matcher (such as Nearest Neighbor Similarity Ratio (NNSR)) to obtain a plurality of matched key point pairs $C_{ab}$. The plurality of matched key point pairs are 2-Dimensional (2D) in nature. Further, the GCPE module filters a set of matched key point pairs $C_{ab}^m$ from the plurality of matched key point pairs based on a ratio test (*El Banani et. al.: UnsupervisedRR: Unsupervised Pointcloud Registration via Differentiable Rendering. In: CVPR (2021)*. The filtered set of matched key point pairs are back-projected to obtain a set of 3-Dimensional (3D) matched key point pairs by using the depth image comprised in the previous observation $D_a$, the depth image comprised in the current observation $D_b$ and a plurality of parameters of a camera ($K$) of the robot used to capture the current and the previous observations. Next, the GCPE module performs a plurality of steps for a plurality of iterations until percentage increase of a best pose score at an iteration is higher than a predefined threshold value according to algorithm 1 given below. The percentage increase of the best pose score is calculated according to equation (1), wherein $Score_{T_{sample}}^{best}$ is the best pose score at current iteration and $Score_{T_{sample}}^{last.best}$ is the best pose score obtained a previous iteration.

$$\frac{Score_{T_{sample}}^{best} - Score_{T_{sample}}^{last.best}}{Score_{T_{sample}}^{best}} \quad \dots \dots (1)$$

The plurality of steps comprise generating a plurality of candidate relative poses using a relative pose sampler function by alternatively sampling a rotation and a translation from a normal distribution of poses. In the first iteration, the normal distribution is generated using the action prior as mean and a predefined standard deviation. In subsequent iterations, the normal distribution is generated using a coarse relative pose estimated in a previous iteration as mean and half of standard deviation used in the previous iteration. Once the plurality of candidate relative poses are generated, a plurality of pose scores associated with the plurality of candidate relative poses are computed. A pose score for a candidate relative pose among the plurality of candidate poses is computed by determining a plurality of weights corresponding to the set of 3D matched key point pairs for the candidate relative pose using a Motion Prior based Correspondence Weighing (MPCW) function (equation (2)) and summing up the plurality of weights to obtain the pose score. Once the plurality of pose scores are computed, a best pose among the plurality of candidate relative poses having a best pose score is selected. The best pose score is a highest pose score among the plurality of pose scores. The best pose selected at the end of the plurality of iterations is considered as the coarse relative pose of the robot.

$$W^{j}_{c^{i}_{ab}} = \frac{W^{j-1(best)}_{c^{i}_{ab}}}{\left(T_{sampled}(p^{i}_{a})-p^{i}_{b}\right)^{2}+\left(T_{sampled}{}^{-1}(p^{i}_{b})-p^{i}_{a}\right)^{2}} \quad \ldots\ldots \quad (2),$$

wherein $W^{j}_{c^{i}_{ab}}$ is a weight associated with an $i$th matched key point pair $C^{i}_{ab}$ from among the set of 3D matched key point pairs at a current iteration $j$, $W^{j-1(best)}_{c^{i}_{ab}}$ is plurality of weights of the set of 3D matched key point pairs for a best pose obtained at a previous iteration $j$ - 1, $T_{sampled}$ represents the plurality of candidate poses, $p^{i}_{a}$ is an $i$th key point from among the first set of key points and $p^{i}_{b}$ is $i$th key point from among the second set of key points.

GCPE Module Algorithm 1/pseudo code

**Input**: Set of 3D matched key point pairs $(C_{ab}{}^m)$, action-prior $T_{ap}$ or $\left(x_{ap}, y_{ap}, \theta_{ap}\right)$, standard deviation of pose sampling $T_\sigma^{ps}$ or $(x_\sigma, y_\sigma, \theta_\sigma)$

**Output**: Coarse Relative Pose $T_{cp}\left(x_{cp}, y_{cp}, \theta_{cp}\right)$

**Function** EstimateRelativePose($C_{ab}{}^m$, $T_{ap}$)

$$j \leftarrow 0;$$

$$W_{corr}^{best} \leftarrow \emptyset; \quad /*\{W\text{: weights}\}*/$$

**repeat**

**if** $j$ is even **then**

$$T_{samples} \leftarrow SampleRot\left(T_{ap}, T_\sigma^{ps}\right);$$

**else**

$$T_{samples} \leftarrow SampleTrans\left(T_{ap}, T_\sigma^{ps}\right);$$

$$W_{corr} \leftarrow MPCW\left(C_{ab}{}^m, T_{samples}, W_{corr}^{best}\right);$$

$$Scores_{T_{samples}} \leftarrow \sum_{i=1}^{c} W_{corr};$$

$$Score_{T_{sample}}^{best} \leftarrow \max\left(Scores_{T_{samples}}\right);$$

$$idx_{T_{sample}}^{best} \leftarrow \arg\max\left(Scores_{T_{samples}}\right);$$

$$W_{corr}^{best} \leftarrow W_{corr}\left[idx_{T_{samples}}^{best}\right];$$

$$T_{ap} \leftarrow T_{samples}\left[idx_{T_{sample}}^{best}\right];$$

$$T_\sigma^{ps} \leftarrow T_\sigma^{ps}/2;$$

$$j \leftarrow j + 1;$$

$$\textbf{until } \frac{Score_{T_{sample}}^{best} - Score_{T_{sample}}^{last.best}}{Score_{T_{sample}}^{best}} > \epsilon_{score};$$

$$T_{cp} \leftarrow T_{ap};$$

**Return** $T_{cp}$;

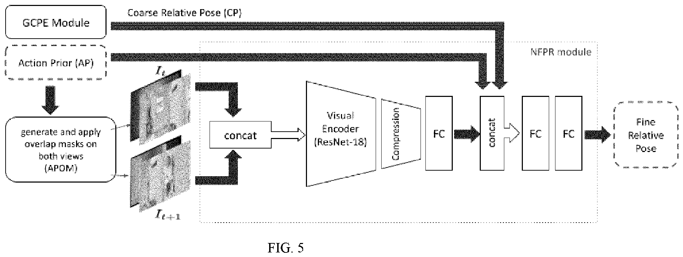

FIG. 5 illustrates the working of Neural Fine Pose Regression (NFPR) module, according to some embodiments of the present disclosure. The NFPR module determines the relative pose of the robot using the plurality of inputs and the coarse relative pose obtained from GCPE module as motion prior. Firstly, the Action Prior based Overlap Mask (APOM) block illustrated in FIG. 5 generates a current observation overlap mask and a previous observation overlap mask for an overlapping region between the previous observation and the current observation. The previous observation overlap mask is generated by warping RGB image comprised in the current observation onto the previous observation using the depth image comprised in the current observation and an inverse of the action prior. The current observation overlap mask is generated by warping RGB image comprised in the previous observation onto the current observation using the depth the depth image comprised in the previous observation and the action prior. Then the APOM block masks the current observation and the previous observation using the current observation overlap mask $I_{t+1}$, and the previous observation overlap mask to obtain a current masked observation and a previous masked observation $I_t$. Further, the current masked observation and the previous masked observation are stacked (or concatenated) together channel-wise to obtain a stacked feature. This stacked feature is fed as input to a deep neural network to regress a fine pose estimate based on the stacked feature, the action prior and the motion prior. The regressed fine pose estimate is considered as the relative pose of the robot. In an embodiment, the deep neural network consists of a ResNet-18 based visual feature encoder followed by a compression block and a 3-layer MLP pose decoder. Similar deep neural network architectures may be used in alternate embodiments.

Once the coarse relative pose is determined, at step 206 of the method 200, the one or more hardware processors 104 are configured to update a plurality of goal coordinates of the robot at the previous timestep based on the relative pose of the robot. Once the plurality of goal coordinates of the robot are updated, at step 208 of the method 200, the one or more hardware processors 108 are configured to determine a next action to be performed by the robot at the current timestep based on the updated plurality of goal coordinates using a navigation policy for ground navigation by the robot. In an embodiment, the navigation policy is determined using a reinforcement learning technique to decide the next primitive action (forward, left, right, stop) for the robot to go towards its goal location in the environment. Method 200 is repeated for a plurality of time steps until the robot reaches its goal location. The method 200 can be applied to any kind of robot navigation tasks including point goal navigation, object goal navigation, rearrangement, etc.

EXPERIMENTAL RESULTS

Dataset: Habitat Simulator (Savva, M. et. al.: Habitat: A Platform for Embodied AI Research. In: Proceedings of the IEEE/CVF International Conference on Computer Vision (ICCV) (2019), Gibson Scene dataset (Xia, F. et.al.: Gibson env: Real-world perception for embodied agents. In: 2018 IEEE/CVF Conference on Computer Vision and Pattern Recognition. pp. 9068-9079 (2018)) and the PointNav v2 task dataset from Habitat-Lab (https://github.com/facebookresearch/habitat-lab/) for training and evaluation of the overall point goal navigation task. For training the NFPR module, a static dataset $D = (O_{t-1}, O_t, T_{ap}, T_{cp}, T_{gt})$ was generated using an oracle agent (has access to ground-truth map) and shortest path follower policy to unroll the trajectories from which the RGB-D pairs (previous observation $O_{t-1}$, current observation $O_t$), the action prior $T_{ap}$ and the ground-truth relative pose $T_{gt}$ are uniformly sampled and stored. During this dataset generation phase, the GCPE module was used to compute the coarse motion prior $T_{cp}$ and cache it as part of the dataset sample tuple to be used directly during the training phase. This reduces training time by not having to compute the motion prior for the same observations repeatedly in each epoch. The training dataset (50k to 400k) has been collected by uniformly sampling 20% of the observations from the oracle trajectories of the PointNav v2 task episodes in the 72 scenes of the Gibson training split. The validation dataset (10k) has been collected by uniformly sampling 75% of the observations from the oracle trajectories of the PointNav v2 task episodes in the 14 scenes of the Gibson 4+ validation split.

Training details: The NFPR module was trained on the 400k dataset for 50 epochs with batch size of 128, Adam optimizer with a learning rate of $10^{-4}$ and mean squared error (MSE) loss for both rotation and translation. Model checkpoints are saved periodically after every epoch and the checkpoint with the lowest validation loss is retained.

Evaluation details: To evaluate the performance of the VO module (GCPE and NFPR) in the context of point goal navigation, method 200 is implemented and test it against the validation split of the Gibson PointNav v2 task which consists of 994 episodes. For the RL based navigation policy, the pretrained model checkpoints are taken from Partsey, R. et. al: Is mapping necessary for realistic pointgoal navigation? In: Proceedings of the IEEE/CVF Conference on Computer Vision and Pattern Recognition (CVPR). pp. 17232-17241 (June 2022). The agent is evaluated primarily using 4 different navigation metrics:

1. Success ($S_i$): A binary metric which considers an episode to be successful ($S_i = 1$) if the agent stops within 0.36m (2 x agent-radius) of the point-goal, otherwise not ($S_i = 0$).
2. Success weighted by Path Length (SPL) is calculated according to equation (3).

$$SPL = \frac{1}{N} \sum_{i=1}^{N} S_i \cdot \frac{l_i}{max(p_i, l_i)} \ \dots\dots (3)$$

where, $S_i$ is the binary indicator of success, $p_i$ is the agent's path length, $l_i$ is the shortest path length (geodesic distance) for each episode i, and N is the total number of episodes.
3. Soft-SPL: This metric replaces binary success used in SPL calculation with the progress towards goal. Soft-SPL is calculated by equation (4).

$$SoftSPL = \frac{1}{N}\sum_{i=1}^{N}\left(1 - \frac{d_{T_i}}{d_{0_i}}\right)\cdot\left(\frac{l_i}{max(p_i,l_i)}\right) \ \ldots\ (4)$$

where, $d_{0_i}$ is the initial distance to goal and $d_{T_i}$ is the distance to goal at the end of the episode (on both successes and failures) for each episode *i*.

4. Distance To Goal $d_g$ : It is the geodesic distance to the goal when the "stop" command is issued to the agent.

To understand specifically the VO model's performance, 3 pose metrics are included:

1. Mean Relative Pose Error (RPE) - Rotation: This metric computes the rotation error per frame-pair according to equation (5).

$$RPE(Rot.) = \frac{1}{N}\sum_{i=1}^{N}\frac{1}{M}\sum_{j=1}^{M}cos^{-1}\left(\frac{Trace\left(\left(R_{pred}^{j}\right)^{-1}R_{gt}^{j}-1\right)}{2}\right) \ \ldots\ (5)$$

where, $R_{pred}^{j}$ and $R_{gt}^{j}$ are the rotational components of the final predicted relative pose and the ground-truth relative pose between the frame pair at time-step *j* of episode *i*. *M* is the total number of timesteps per episode.

2. Mean Relative Pose Error (RPE) - Translation: This metric computes the translation error per frame-pair according to equation (6).

$$RPE(translation) = \frac{1}{N}\sum_{i=1}^{N}\frac{1}{M}\sum_{j=1}^{M}\left\|t_{pred}^{j} - t_{gt}^{j}\right\|_2 \ \ldots\ (6)$$

where, $t_{pred}^{j}$ and $t_{gt}^{j}$ are the translational components of the final predicted relative pose and the ground-truth relative pose between the frame pair at time-step *j* of episode *i*.

3. Mean Absolute Trajectory Error (ATE) - Translation: This metric helps to understand the overall drift of the trajectory due to the accumulation of pose errors at each time-step. ATE is calculated according to equation (7).

$$ATE(translation) = \frac{1}{N}\sum_{i=1}^{N}\frac{1}{M}\sum_{j=1}^{M}\left\|{t_{abs}}_{pred}^{j} - {t_{abs}}_{gt}^{j}\right\|_2 \ \ldots\ (7)$$

where, ${t_{abs}}_{pred}^{j}$ and ${t_{abs}}_{gt}^{j}$ are the translational components of the absolute pose of the predicted trajectory and the absolute pose of the ground-truth trajectory at time-step *j* of episode *i*. These absolute poses are computed by accumulating frame-wise relative poses from 0-th timestep to the *j*-th timestep of the agent's trajectory according to equation (8).

$$T_{abs}^{\ j} = T_{abs}^{\ j-1}.T_{rel_j}^{\ j-1} \ \ldots\ (8)$$

Results: The method 200 is evaluated and the results are compared with the state-of-the-art (SoA) VO model from Partsey, R. et.al.: Is mapping necessary for realistic pointgoal navigation? In: Proceedings of the IEEE/CVF Conference on Computer Vision and Pattern Recognition (CVPR). pp. 17232-17241 (June 2022). Also, the GCPE module's performance is compared with different geometric pose estimator baselines created using SoA sub-modules. In all the experiments, the RL-based navigation policy from the SoA is used to study the impact of various VO methods.

GCPE results and baseline comparisons: The GCPE module is integrated with the navigation policy and evaluated on the validation split of the Gibson PointNav v2 task. The hyperparameters of the GCPE module were determined empirically using data from one scene of the Gibson validation split. The standard deviations $x_\sigma$, $y_\sigma$, $\theta_\sigma$ used by the pose-sampler function were set to 0.06m, 0.06m and 4.0deg. Four different baseline methods (as listed in table 1) are used to compare with GCPE. All the baselines consist of 3 sub-modules namely the key point feature extractor, the key point matcher and the pose estimator. The key points are detected, described and matched in 2D RGB views from observations $O_{t-1}$ and $O_t$. Then these 2D-2D matched key point pairs are back-projected to 3D using depth maps from the same observations. The relative pose is then estimated from these 3D-3D matched key point pairs using the pose estimator sub-module.

Table 1

| Baseline name | Key point Extractor | Key point Matcher | Pose Estimator |
|---|---|---|---|
| SP-NNSR-TPP | SuperPoint (SP) | Nearest Neighbor Similarity Ratio (NNSR) | Teaser++ (TPP) |
| SP-NNSR-RWP | SuperPoint | NNSR | Randomized Weighted Procrustes (RWP) |
| SP-LG-TPP | SuperPoint | LightGlue (LG) | Teaser++ |
| SP-LG-RWP | SuperPoint | LightGlue | Randomized Weighted Procrustes |

In Table 1, SuperPoint is a key point extractor taken from DeTone, D. et.al.: Superpoint: Self-supervised interest point detection and description (2018), LightGlue is a key point matcher referred from Lindenberger, P. et. al.: Lightglue: Local feature matching at light speed (2023), Teaser++ is a pose estimator disclosed in Yang, H. et.al.: TEASER: Fast and Certifiable Point Cloud Registration. IEEE Trans. Robotics (2020), Nearest Neighbor Similarity Ratio (NNSR) and Randomized Weighted Procrustes (RWP) are referred from El Banani et. al.: UnsupervisedRR: Unsupervised Pointcloud Registration via Differentiable Rendering. In: CVPR (2021).

Superpoint (DeTone, D. et.al.: Superpoint: Self-supervised interest point detection and description (2018) available at https://github.com/rpautrat/SuperPoint) was selected as the key point extractor for all the baselines as it is one of the highly accurate learned feature descriptors and it is also used in the GCPE module. It performs better than classical key point descriptors like SIFT, ORB, etc. For the key point matcher, one classical method - Nearest Neighbor Similarity Ratio (NNSR) (see Ratio Test *in* El Banani et. al.: UnsupervisedRR: Unsupervised Pointcloud Registration via Differentiable Rendering. In: CVPR (2021*)*) and another learned SoA method - LightGlue *(*Lindenberger, P. et. al.: Lightglue: Local feature matching at light speed (2023*)* are selected. Both the methods assign weights to the matched key point pairs between 0 and 1 where higher the weight, more the probability of the matched key point pairs being an inlier. As observed from table 2, LightGlue performs better than NNSR for the same key point extractor and pose estimator combination. This is due to its superior matched key point pairs outlier filtering. For the pose estimator, a modified variant (RWP) of the classical Weighted Procrustes method (see randomized optimization in El Banani et. al.: UnsupervisedRR: Unsupervised Pointcloud Registration via Differentiable Rendering. In: CVPR (2021*)*) and another SoA robust rigid transform estimation method - Teaser++ (Yang, H. et.al.: TEASER: Fast and Certifiable Point Cloud Registration. IEEE Trans. Robotics (2020*)* are selected. It was observed that RWP performs better than Teaser++ for the same key point extractor and matcher combination. This might be due to the fact that Teaser++'s algorithm doesn't use the weights associated with matched key point pairs and prunes the outliers based on hard thresholds. Whereas RWP successfully uses the weights from either NNSR or LightGlue and gives a better pose estimate.

Table 2

| | Method | Navigation Metrics | | | | Pose Metrics | | |
|---|---|---|---|---|---|---|---|---|
| | | Success (%) ↑ | SPL (%) ↑ | Soft-SPL (%) ↑ | $d_g$ (cm) ↓ | RPE Rot. MAE (deg) ↓ | RPE Trans. MAE (cm) ↓ | ATE Trans. MAE (cm) ↓ |
| 1 | SP-NNSR-TPP | 13.58 | 9.51 | 34.12 | 286.85 | 5.25 | 12.11 | 193.78 |
| 2 | SP-NNSR-RWP | 14.59 | 10.28 | 31.67 | 310.86 | 5.43 | 12.68 | 205.77 |
| 3 | SP-LG-TPP | 18.61 | 13.68 | 37.72 | 245.07 | 2.56 | 9.56 | 182.06 |
| 4 | SP-LG-RWP | 28.77 | 20.88 | 46.20 | 188.18 | 1.71 | 6.28 | 107.29 |
| 5 | Method 200 | 35.31 | 26.19 | 57.03 | 120.56 | 1.42 | 4.54 | 58.80 |

It can be observed from Table 2 that GCPE succeeds in around 35% episodes, and performed better than the baselines created using off-the-shelf SoA submodules and shows a drastic improvement in ATE. This can be attributed to the fact that none of the other baselines bias their pose estimation using the action prior of the agent. This results in large pose estimation errors when the agent encounters difficult frame-pairs such as featureless walls, high depth noise, etc. which affects the key point matching step increasing the number of outliers. These errors in some of the frame pairs accumulate over time and causes huge trajectory drift as evidenced by ATE. On the other hand, GCPE safeguards the agent's pose estimates by performing iterative matched key point pairs outlier filtering (or re-weighting) using the action prior as an initial estimate and converging towards the coarse pose estimate.

Table 3

| | Navigation Success (%) | |
|---|---|---|
| Dataset Size | Method 200 | Partsey et.al. (SoA) |
| 50k | 63.0 | 35.0 |
| 100k | 66.0 | 60.0 |
| 200k | 72.0 | 65.0 |
| 400k | 78.0 | 72.0 |

Table 3 illustrates a comparison of navigation success percentage of method 200 versus SoA Method on increasing the dataset size. Success (%) has been rounded off to the nearest integer. As evident from Table 3, the method 200 consistently performed better than SoA method for the same dataset size and also achieved nearly same navigation success using approximately half the amount of data, i.e. more sample efficient than SoA (up to 2x). The method 200 was trained on 400k reports much lower ATE than that of SoA which indicates lesser outlier pose estimates (frame-pairs having large pose errors as compared to rest) among the trajectory time-steps. This superiority can be attributed to the various simple, yet effective modifications applied to the base-model, especially the inclusion of motion priors from the GCPE module and the action-prior based overlap masks for the RGB-D inputs.

NFPR Ablations: To gain insights about which modifications contribute to superiority of method 200, the three major modifications in various combinations are ablated and agent's performance is evaluated against the Gibson PointNav v2 validation split. Table 4 illustrates evaluation results of the overall pipeline of method 200 - GCPE + NFPR + NavPolicy against the validation split of the Gibson PointNav v2 task dataset. All the ablations are run 4 times each using a different seed and then averaged. Ablations are also performed at varying dataset sizes (50k and 200k) to confirm whether the benefits remain consistent or not.

Table 4

| | Dataset Samples (K) | Model | | | Navigation Metrics | | | | Pose Metrics | | |
|---|---|---|---|---|---|---|---|---|---|---|---|
| | | AP | CP | APOM | Success (%) ↑ | SPL (%) ↑ | SoftSPL (%) ↑ | $d_g$ (cm) | RPE Rot. MAE (deg) | RPE Trans. MAE (cm) ↓ | ATE Trans. MAE (cm) ↓ |
| 1 | 50 | * | | | 37.27 | 28.90 | 63.20 | 119.71 | 1.45 | 3.86 | 46.37 |
| 2 | 50 | | * | | 57.79 | 45.11 | 67.87 | 76.01 | 0.89 | 2.51 | 28.57 |
| 3 | 50 | * | * | | 54.70 | 42.36 | 66.32 | 95.78 | 0.94 | 2.55 | 31.75 |
| 4 | 50 | * | | * | 45.85 | 35.94 | 66.29 | 101.8 | 0.99 | 2.93 | 37.86 |
| 5 | 50 | * | * | * | 63.40 | 52.44 | 69.74 | 71.15 | 0.75 | 2.21 | 22.54 |
| 8 | 200 | * | * | | 69.11 | 53.95 | 70.01 | 55.12 | 0.64 | 2.07 | 20.18 |
| 9 | 200 | * | | * | 67.51 | 52.96 | 69.81 | 74.31 | 0.65 | 2.06 | 23.21 |
| 10 | 200 | * | * | * | 72.18 | 55.04 | 69.68 | 56.16 | 0.57 | 1.69 | 20.62 |
| 11 | 400 | * | * | * | 78.21 | 61.01 | 71.87 | 45.06 | 0.51 | 1.52 | 15.51 |
| 12 | 400 | Partsey.etal(SoA) | | | 72.23 | 55.99 | 70.34 | 59.12 | 0.56 | 1.80 | 19.09 |

Effect of Motion Prior (CP): As evident from Table 4, the inclusion of CP benefits the model a lot as compared to only action-prior (AP) and also with overlap masks (APOM), hence the need for GCPE or any other coarse pose estimator is established. CP is much more accurate than AP, so it helps the model learns the residual $\triangle pose$ needed to make it close enough to the ground-truth (GT) pose, thereby converging in the right direction and decreasing the training loss.

Effect of Action Prior (AP): Using only coarse motion-priors (CP) from an estimation module (like GCPE) to train the NFPR module leads to either overfitting or plateauing upon prolonged training. The validation errors either increase or stop decreasing after a certain point in time. This can be attributed to the fact that CP being a strong prior can make the model get stuck in a local minima when a bunch of samples with not-so-good coarse pose estimates appear in an epoch.

Feeding the action prior along with the coarse motion prior to the pose decoder block provides a regularization effect to the neural network. This helps the model learn better for a longer time on larger datasets. It can be noticed that only CP performs better than AP+CP on 50k dataset but these gains diminish, and the above problems arise when increasing dataset size.

Effect of Action Prior based Overlap Masks (APOM): In case of the usual unmasked RGB-D inputs, the model needs to learn and figure out the overlapping region between the two views in order to predict an accurate relative pose. This is a hard problem for simple CNNs and is usually approached by using attention mechanism of transformers. In order to keep a lightweight CNN-based model and yet help the model focus or attend to the overlapping region of the two views, the RGB-D inputs are explicitly masked by re-projecting one view to another and vice-versa using the action prior pose. This hard attention helps the model perform better as evident from Table 4. Coarse motion prior (CP) could also be used to generate the overlap masks, but it was observed from experiments that APOM performs better than CPOM due to the highly stochastic nature of CP which hinders the model from learning consistent patterns.

Thus, the embodiments of present disclosure provide a robust and sample-efficient VO pipeline for use in point goal navigation of agents. It is based on the effective utilization of motion priors available during agent navigation. Method 200 was experimented using action priors from the agent planner, but other motion priors like wheel odometry, Inertial Measurement Unit (IMU), etc. can also be utilized to improve its efficacy further. Extensive experiments were conducted to show that the method 200 performs better and is more sample-efficient (up to 2x) than SoA. The training-free GCPE module also performs better than SoA baselines in standalone evaluation. The method 200 can also be used in other embodied navigation tasks such as ObjectNav, Rearrangement, etc. in addition to point goal navigation.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method comprising:

   obtaining (202), via one or more hardware processors, a plurality of inputs comprising: i) a previous observation comprising an RGB image and a depth image captured at a previous time step from a robot, ii) an action prior defining an action performed by the robot at the previous time step, and iii) a current observation an RGB image and a depth image captured at a current time step obtained after performing the action by the robot;
   determining (204), via the one or more hardware processors, a relative pose of the robot between the previous observation and the current observation based on the plurality of inputs by using a Visual Odometry (VO) module, wherein the VO module comprises i) a Geometric Coarse Pose Estimator (GCPE) module, and ii) a Neural Fine Pose Regression (NFPR) module, wherein the GCPE module estimates a coarse relative pose of the robot using the plurality of inputs, and wherein the NFPR module determines the relative pose of the robot using the plurality of inputs and the coarse relative pose as motion prior;
   updating (206), via the one or more hardware processors, a plurality of goal coordinates of the robot at the previous timestep based on the relative pose of the robot; and
   determining (208), via the one or more hardware processors, a next action to be performed by the robot at the current timestep based on the updated plurality of goal coordinates using a navigation policy for ground navigation by the robot.

2. The processor implemented method as claimed in claim 1, wherein the GCPE module estimates the coarse relative pose of the robot using the plurality of inputs by:

   extracting a first set of visual key points from the RGB image comprised in the previous observation and a second set of visual key points from the RGB image comprised in the current observation using a key point extractor;
   matching a plurality of visual key points between the first set of visual key points and the second set of visual key points using a key point matcher to obtain a plurality of matched key point pairs, wherein the plurality of matched key point pairs are 2-Dimensional (2D);
   filtering a set of matched key point pairs from the plurality of matched key point pairs based on a ratio test;
   back-projecting the filtered set of matched key point pairs to obtain a set of 3-Dimensional (3D) matched key point pairs by using the depth image comprised in the previous observation, the depth image comprised in the current observation and a plurality of parameters of a camera of the robot used to capture the current and the previous observations;
   performing a plurality of steps for a plurality of iterations until percentage increase of a best pose score at an iteration is higher than a predefined threshold value, wherein the plurality of steps comprise:

      generating a plurality of candidate relative poses using a relative pose sampler function;
      computing a plurality of pose scores associated with the plurality of candidate poses, wherein a pose score for a candidate pose among the plurality of candidate poses is computed by:

         determining a plurality of weights corresponding to the set of 3D matched key point pairs for the candidate pose using a Motion Prior based Correspondence Weighing (MPCW) function; and
         summing up the plurality of weights to obtain the pose score; and

      selecting a best pose among the plurality of candidate relative poses having a best pose score, wherein the best pose score is a highest pose score among the plurality of pose scores, and wherein the best pose selected at the end of the plurality of iterations is considered as the coarse relative pose of the robot.

3. The processor implemented method as claimed in claim 2, wherein generating a plurality of candidate relative poses using a relative pose sampler function comprises alternatively sampling a rotation and a translation from a normal distribution of poses, wherein the normal distribution is generated in a first iteration among the plurality of iterations using the action prior as mean and a predefined standard deviation, and wherein the normal distribution is generated in a current iteration among the plurality of iterations using a coarse relative pose estimated in a previous iteration as mean and half of standard deviation used in the previous iteration.

4. The processor implemented method as claimed in claim 2, wherein the MPCW function determines weight as

$$W^j_{c^i_{ab}} = \frac{W^{j-1(best)}_{c^i_{ab}}}{(T_{sampled}(p^i_a)-p^i_b)^2+(T_{sampled}^{-1}(p^i_b)-p^i_a)^2}$$

, and wherein $W^j_{c^i_{ab}}$ is a weight associated with an $i$th matched key point pair $C^i_{ab}$ from among the set of 3D matched key point pairs at a current iteration $j$, $W^{j-1(best)}_{c^i_{ab}}$ is plurality of weights of the set of 3D matched key point pairs for a best pose obtained at a previous iteration $j - 1$, $T_{sampled}$ represents the plurality of candidate poses, $p^i_a$ is an $i$th key point from among the first set of key points and $p^i_b$ is $i$th key point from among the second set of key points.

5. The processor implemented method as claimed in claim 1, wherein the NFPR module determines the relative pose of the robot using the plurality of inputs and the coarse relative pose as motion prior by:

generating a current observation overlap mask and a previous observation overlap mask for an overlapping region between the previous observation and the current observation, wherein the previous observation overlap mask is generated by warping RGB image comprised in the current observation onto the previous observation using the depth image comprised in the current observation and an inverse of the action prior, and wherein the current observation overlap mask is generated by warping RGB image comprised in the previous observation onto the current observation using the depth the depth image comprised in the previous observation and the action prior;
masking the current observation and the previous observation using the current observation overlap mask, and the previous observation overlap mask to obtain a current masked observation and a previous masked observation;
stacking the current masked observation and the previous masked observation together channel-wise to obtain a stacked feature; and
regressing a fine pose estimate using a deep neural network based on the stacked feature, the action prior and the motion prior, wherein the regressed fine pose estimate is considered as the relative pose of the robot.

6. A system (100), comprising:

a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:

obtain a plurality of inputs comprising i) a previous observation comprising an RGB image and a depth image captured at a previous time step from a robot, ii) an action prior defining an action performed by the robot at the previous time step, and iii) a current observation an RGB image and a depth image captured at a current time step obtained after performing the action by the robot;
determine a relative pose of the robot between the previous observation and the current observation based on the plurality of inputs by using a Visual Odometry (VO) module, wherein the VO module comprises i) a Geometric Coarse Pose Estimator (GCPE) module, and ii) a Neural Fine Pose Regression (NFPR) module, wherein the GCPE module estimates a coarse relative pose of the robot using the plurality of inputs, and wherein the NFPR module determines the relative pose of the robot using the plurality of inputs and the coarse relative pose as motion prior;
update a plurality of goal coordinates of the robot at the previous timestep based on the relative pose of the robot; and
determine a next action to be performed by the robot at the current timestep based on the updated plurality of goal coordinates using a navigation policy for ground navigation by the robot.

7. The system as claimed in claim 6, wherein the GCPE module estimates the coarse relative pose of the robot using the plurality of inputs by:

extracting a first set of visual key points from the RGB image comprised in the previous observation and a second set of visual key points from the RGB image comprised in the current observation using a key point extractor;
matching a plurality of visual key points between the first set of visual key points and the second set of visual key points using a key point matcher to obtain a plurality of matched key point pairs, wherein the plurality of matched key point pairs are 2-Dimensional (2D);
filtering a set of matched key point pairs from the plurality of matched key point pairs based on a ratio test;
back-projecting the filtered set of matched key point pairs to obtain a set of 3-Dimensional (3D) matched key point pairs by using the depth image comprised in the previous observation, the depth image comprised in the current observation and a plurality of parameters of a camera of the robot used to capture the current and the previous observations;
performing a plurality of steps for a plurality of iterations until percentage increase of a best pose score at an iteration is higher than a predefined threshold value, wherein the plurality of steps comprise:

generating a plurality of candidate relative poses using a relative pose sampler function;
computing a plurality of pose scores associated with the plurality of candidate poses, wherein a pose score for a candidate pose among the plurality of candidate poses is computed by:

determining a plurality of weights corresponding to the set of 3D matched key point pairs for the candidate pose using a Motion Prior based Correspondence Weighing (MPCW) function; and
summing up the plurality of weights to obtain the pose score; and

selecting a best pose among the plurality of candidate relative poses having a best pose score, wherein the best pose score is a highest pose score among the plurality of pose scores, and wherein the best pose selected at the end of the plurality of iterations is considered as the coarse relative pose of the robot.

8. The system as claimed in claim 7, wherein generating a plurality of candidate relative poses using a relative pose sampler function comprises alternatively sampling a rotation and a translation from a normal distribution of poses, wherein the normal distribution is generated in a first iteration among the plurality of iterations using the action prior as mean and a predefined standard deviation, and wherein the normal distribution is generated in a current iteration among the plurality of iterations using a coarse relative pose estimated in a previous iteration as mean and half of standard deviation used in the previous iteration.

9. The system as claimed in claim 7, wherein the MPCW function determines weight as

$$W^j_{c^i_{ab}} = \frac{W^{j-1(best)}_{c^i_{ab}}}{(T_{sampled}(p^i_a) - p^i_b)^2 + (T_{sampled}^{-1}(p^i_b) - p^i_a)^2}$$ , and wherein $W^j_{c^i_{ab}}$ is a weight associated with an

$i$th matched key point pair $C^i_{ab}$ from among the set of 3D matched key point pairs at a current iteration j, $W^{j-1(best)}_{c^i_{ab}}$ is plurality of weights of the set of 3D matched key point pairs for a best pose obtained at a previous iteration $j - 1$,

$T_{sampled}$ represents the plurality of candidate poses, $p^i_a$ is an $i$th key point from among the first set of key points and

$p^i_b$ is $i$th key point from among the second set of key points.

10. The system as claimed in claim 6, wherein the NFPR module determines the relative pose of the robot using the plurality of inputs and the coarse relative pose as motion prior by:

generating a current observation overlap mask and a previous observation overlap mask for an overlapping region between the previous observation and the current observation, wherein the previous observation overlap mask is generated by warping RGB image comprised in the current observation onto the previous observation using the depth image comprised in the current observation and an inverse of the action prior, and wherein the current observation overlap mask is generated by warping RGB image comprised in the previous observation onto the current observation using the depth the depth image comprised in the previous observation and the action prior;
masking the current observation and the previous observation using the current observation overlap mask, and the previous observation overlap mask to obtain a current masked observation and a previous masked observation;

stacking the current masked observation and the previous masked observation together channel-wise to obtain a stacked feature; and

regressing a fine pose estimate using a deep neural network based on the stacked feature, the action prior and the motion prior, wherein the regressed fine pose estimate is considered as the relative pose of the robot.

11. One or more non-transitory machine-readable information storage mediums comprising one or more instructions which when executed by one or more hardware processors cause:

obtaining a plurality of inputs comprising: i) a previous observation comprising an RGB image and a depth image captured at a previous time step from a robot, ii) an action prior defining an action performed by the robot at the previous time step, and iii) a current observation an RGB image and a depth image captured at a current time step obtained after performing the action by the robot;

determining a relative pose of the robot between the previous observation and the current observation based on the plurality of inputs by using a Visual Odometry (VO) module, wherein the VO module comprises i) a Geometric Coarse Pose Estimator (GCPE) module, and ii) a Neural Fine Pose Regression (NFPR) module, wherein the GCPE module estimates a coarse relative pose of the robot using the plurality of inputs, and wherein the NFPR module determines the relative pose of the robot using the plurality of inputs and the coarse relative pose as motion prior;

updating a plurality of goal coordinates of the robot at the previous timestep based on the relative pose of the robot; and

determining a next action to be performed by the robot at the current timestep based on the updated plurality of goal coordinates using a navigation policy for ground navigation by the robot.

12. The one or more non-transitory machine-readable information storage mediums as claimed in claim 11, wherein the GCPE module estimates the coarse relative pose of the robot using the plurality of inputs by:

extracting a first set of visual key points from the RGB image comprised in the previous observation and a second set of visual key points from the RGB image comprised in the current observation using a key point extractor;

matching a plurality of visual key points between the first set of visual key points and the second set of visual key points using a key point matcher to obtain a plurality of matched key point pairs, wherein the plurality of matched key point pairs are 2-Dimensional (2D);

filtering a set of matched key point pairs from the plurality of matched key point pairs based on a ratio test;

back-projecting the filtered set of matched key point pairs to obtain a set of 3-Dimensional (3D) matched key point pairs by using the depth image comprised in the previous observation, the depth image comprised in the current observation and a plurality of parameters of a camera of the robot used to capture the current and the previous observations;

performing a plurality of steps for a plurality of iterations until percentage increase of a best pose score at an iteration is higher than a predefined threshold value, wherein the plurality of steps comprise:

generating a plurality of candidate relative poses using a relative pose sampler function;

computing a plurality of pose scores associated with the plurality of candidate poses, wherein a pose score for a candidate pose among the plurality of candidate poses is computed by:

determining a plurality of weights corresponding to the set of 3D matched key point pairs for the candidate pose using a Motion Prior based Correspondence Weighing (MPCW) function; and

summing up the plurality of weights to obtain the pose score; and

selecting a best pose among the plurality of candidate relative poses having a best pose score, wherein the best pose score is a highest pose score among the plurality of pose scores, and wherein the best pose selected at the end of the plurality of iterations is considered as the coarse relative pose of the robot.

13. The one or more non-transitory machine-readable information storage mediums as claimed in claim 12, wherein generating a plurality of candidate relative poses using a relative pose sampler function comprises alternatively sampling a rotation and a translation from a normal distribution of poses, wherein the normal distribution is generated in a first iteration among the plurality of iterations using the action prior as mean and a predefined standard deviation, and wherein the normal distribution is generated in a current iteration among the plurality of iterations using a coarse relative pose estimated in a previous iteration as mean and half of standard deviation used in the previous iteration.

14. The one or more non-transitory machine-readable information storage mediums as claimed in claim 12, wherein the MPCW function determines weight as $W^j_{C^i_{ab}} = \frac{W^{j-1(best)}_{C^i_{ab}}}{(T_{sampled}(p^i_a)-p^i_b)^2+(T_{sampled}^{-1}(p^i_b)-p^i_a)^2}$ , and wherein $W^j_{C^i_{ab}}$ is a weight associated with an $i$th matched key point pair $C^i_{ab}$ from among the set of 3D matched key point pairs at a current iteration $j$, $W^{j-1(best)}_{C^i_{ab}}$ is plurality of weights of the set of 3D matched key point pairs for a best pose obtained at a previous iteration $j$ - 1, $T_{sampled}$ represents the plurality of candidate poses, $p^i_a$ is an $i$th key point from among the first set of key points and $p^i_b$ is $i$th key point from among the second set of key points.

15. The one or more non-transitory machine-readable information storage mediums of claim 11, wherein the NFPR module determines the relative pose of the robot using the plurality of inputs and the coarse relative pose as motion prior by:

generating a current observation overlap mask and a previous observation overlap mask for an overlapping region between the previous observation and the current observation, wherein the previous observation overlap mask is generated by warping RGB image comprised in the current observation onto the previous observation using the depth image comprised in the current observation and an inverse of the action prior, and wherein the current observation overlap mask is generated by warping RGB image comprised in the previous observation onto the current observation using the depth the depth image comprised in the previous observation and the action prior;

masking the current observation and the previous observation using the current observation overlap mask, and the previous observation overlap mask to obtain a current masked observation and a previous masked observation;

stacking the current masked observation and the previous masked observation together channel-wise to obtain a stacked feature; and

regressing a fine pose estimate using a deep neural network based on the stacked feature, the action prior and the motion prior, wherein the regressed fine pose estimate is considered as the relative pose of the robot.

SYSTEM 100

MEMORY
102

DATABASE
108

HARDWARE
PROCESSOR(S)
104

I/O INTERFACE(S)
106

FIG. 1

200

Obtaining a plurality of inputs comprising: i) a previous observation comprising an RGB image and a depth image captured at a previous time step from a robot, ii) an action prior defining an action performed by the robot at the previous time step, and iii) a current observation an RGB image and a depth image captured at a current time step obtained after performing the action by the robot — 202

Determining a relative pose of the robot between the previous observation and the current observation based on the plurality of inputs by using a Visual Odometry (VO) module — 204

Updating a plurality of goal coordinates of the robot at the previous timestep based on the relative pose of the robot — 206

Determining a next action to be performed by the robot at the current timestep based on the updated plurality of goal coordinates using a navigation policy for ground navigation by the robot — 208

FIG. 2

FIG. 3

FIG. 4

FIG. 5

Europäisches Patentamt

European Patent Office

Office européen des brevets

# EUROPEAN SEARCH REPORT

Application Number

EP 25 19 7564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABOUELNAGA YEHYA ET AL: "DistillPose: Lightweight Camera Localization Using Auxiliary Learning", 2021 IEEE/RSJ INTERNATIONAL CONFERENCE ON INTELLIGENT ROBOTS AND SYSTEMS (IROS), IEEE, 27 September 2021 (2021-09-27), pages 7919-7924, XP034051574, DOI: 10.1109/IROS51168.2021.9635870 [retrieved on 2021-12-03] * pages 1-6; figures 1,2 * | 1-15 | INV. G05D1/243 G05D101/15 G05D111/10 G05D111/63 G06T7/73 |
| A | CN 113 074 729 A (UNIV NANJING AERONAUTICS & ASTRONAUTICS) 6 July 2021 (2021-07-06) * claims 1,2; figures 1-3 * | 1-15 | |

TECHNICAL FIELDS SEARCHED (IPC)

G05D
G06T

The present search report has been drawn up for all claims

| Place of search | Date of completion of the search | Examiner |
|---|---|---|
| Munich | 21 November 2025 | Camerer, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 7564

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2025

| Patent document cited in search report | Publication date | Patent family member(s) | Publication date |
|---|---|---|---|
| CN 113074729 A | 06-07-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421065683

**Non-patent literature cited in the description**

- **SAVVA, M.** Habitat: A Platform for Embodied AI Research. *Proceedings of the IEEE/CVF International Conference on Computer Vision (ICCV)*, 2019
- **XIA, F.** Gibson env: Real-world perception for embodied agents. *2018 IEEE/CVF Conference on Computer Vision and Pattern Recognition.*, 2018, 9068-9079
- **PARTSEY, R.** Is mapping necessary for realistic pointgoal navigation?. *Proceedings of the IEEE/CVF Conference on Computer Vision and Pattern Recognition (CVPR)*, June 2022, 17232-17241
- **LINDENBERGER, P.** *Lightglue: Local feature matching at light speed*, 2023
- **YANG, H.** TEASER: Fast and Certifiable Point Cloud Registration. *IEEE Trans. Robotics*, 2020
- **EL BANANI**. UnsupervisedRR: Unsupervised Point-cloud Registration via Differentiable Rendering. *CVPR*, 2021
- **DETONE, D.** *Superpoint: Self-supervised interest point detection and description*, 2018, https://github.com/rpautrat/SuperPoint